# EUROPEAN PATENT APPLICATION

(11) **EP 1 591 710 A1**
(43) Date of publication of application: **02.11.2005**
(21) Application number: 05008759.2
(22) Date of filing: 21.04.2005
(51) Int. Cl.: F16L 37/098

(54) **Quick-coupling connector for pipes of climate-control, refrigeration and similar systems**

(30) Priority: 26.04.2004 IT MI20040816
(71) Applicant: Manuli Automotive S.p.A., 20090 Trezzano Sul Naviglio (Prov. of Milano) (IT)
(72) Inventor: Mancinelli, Piero, 28000 Chartres (FR); Brule, Aurélien, 28000 Chartres (FR); Lorho, Ludovic, 28130 Maintenon (FR)
(74) Representative: Modiano, Micaela Nadia

(57) **Abstract**

A quick-coupling connector, particularly for pipes of climate-control, refrigeration and similar systems, comprising a first connector portion (2) adapted to be connected to an end (3) of a male pipe and a second connector portion (4) adapted to be connected to an end of a female portion (5), the first and second connector portions (4, 5) being adapted to be connected to each other, at least one elastomeric element (15) being interposed between the end of the male pipe and the end of the female portion when the male pipe and the female portion are connected one inside the other.

## Description

The present invention relates to a quick-coupling connector for pipes of climate-control, refrigeration and similar systems.

As is known, the environmentally-friendly orientation of European standards regarding climate-control, refrigeration and similar systems requires a review of each component of the system in order to optimize it from the standpoint of generation of greenhouse gases released into the environment.

In particular, quick-coupling connectors are currently known which allow to connect two pipes with a male-female type of coupling.

The quick-coupling connectors of the type that is currently in use are provided with a connector that is substantially constituted by a sleeve, in which a first part is arranged around the female pipe and a second part is arranged around the male pipe, with a mutual engagement between the male connector and the female connector parts.

In this way, connection between two pipes occurs very rapidly.

A particularity of this type of connector is its high mechanical fatigue strength and vibration resistance combined with compact dimensions. A drawback is constituted by the need for a specific wrench to reopen it. In engine compartments, this can be a limitation.

However, this type of connector, currently used in the oil-hydraulic field, has not been applied in the field of climate-control, refrigeration and similar systems, indeed because of the lack of tightness with respect to gases such as those used in pipes of climate-control systems and the like.

Quick-coupling joints for use in air-conditioning systems are also known, which however suffer drawbacks in terms of limited mechanical strength, excessive dimensions and of not allowing to verify that locking has occurred.

The aim of the present invention is to provide a quick-coupling connector that can be used for pipes of climate-control, refrigeration and similar systems.

Within this aim, an object of the present invention is to provide a quick-coupling connector that ensures excellent tightness for gases used in climate-control, refrigeration and similar systems.

Another object of the present invention is to provide a quick-coupling connector that is capable of withstanding the pressure, vibrations and heat-aging typical of climate-control, refrigeration and similar systems.

Another object of the present invention is to provide a quick-coupling connector that is highly reliable, relatively easy to manufacture, and has compact dimensions and competitive costs.

This aim and these and other objects that will become better apparent hereinafter are achieved by a quick-coupling connector, particularly for pipes of climate-control, refrigeration and similar systems, comprising a first connector portion adapted to be connected to an end of a male pipe and a second connector portion adapted to be connected to an end of a female portion, said first and second connector portions being adapted to be connected to each other, characterized in that it comprises at least one elastomeric element which is interposed between said end of said male pipe and said end of said female portion when said male pipe and said female portion are connected one inside the other.

Further characteristics and advantages of the invention will become better apparent from the description of preferred but not exclusive embodiments of the quick-coupling connector according to the present invention, illustrated by way of non-limiting example in the accompanying drawings, wherein:
Figure 1 is a transverse sectional view of a first embodiment of the quick-coupling connector according to the present invention;
Figure 2 is a transverse sectional view of a second embodiment of the quick-coupling connector according to the present invention;
Figure 3 is a transverse sectional view of a third embodiment of the quick-coupling connector according to the present invention; and
Figure 4 is a perspective view of the third embodiment of the quick-coupling connector according to the invention.

With reference to the figures, the quick-coupling connector according to the present invention, in accordance with a first embodiment, is designated by the reference numeral 1.

In all the subsequent embodiments, identical reference numerals designate identical elements.

The quick-coupling connector according to the first embodiment comprises a first connector portion 2, which is designed to be connected with an end part 3 of a male pipe, and a second connector portion 4, which is designed to be connected with an end of a female portion 5, which can be a pipe or a female part of an apparatus.

Hereinafter, reference is made generically to a female pipe end for the sake of simplicity.

The first and second connector portions are adapted to engage each other by means of the engagement of the second portion 4 with a step of the first portion 2.

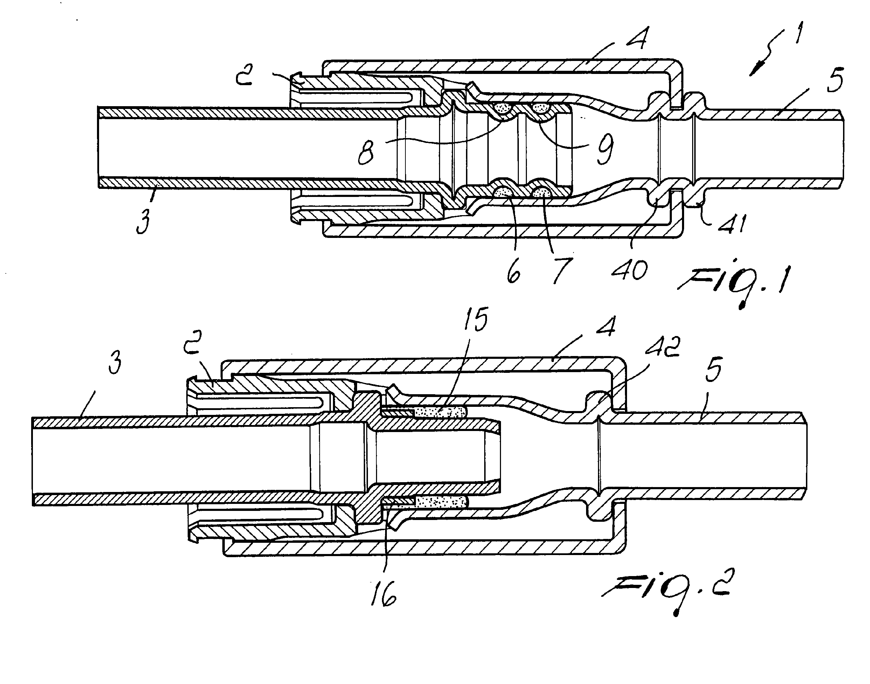

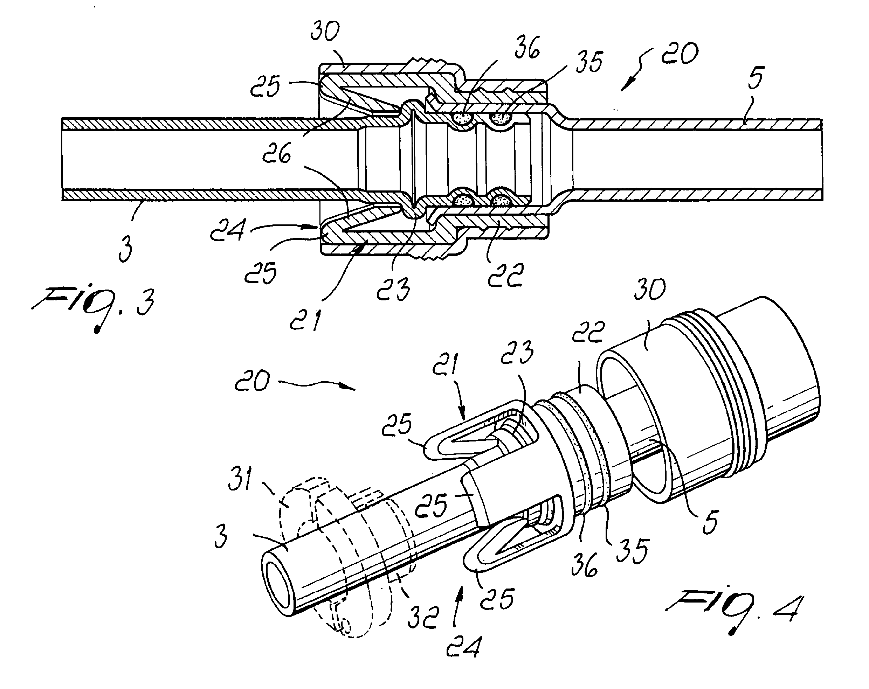

The second connector portion is engaged with the female portion by means of the presence of at least one or two rolled portions, designated by the reference numerals 40 and 41 in Figure 1 and by the reference numeral 42 in Figure 2.

Conveniently, the tightness of the male pipe 3 within the female pipe 5 is ensured, according to the invention, by the presence of at least one elastomeric element, which is arranged circumferentially so as to ensure tightness for the gases normally used in refrigeration, climate-control and similar systems.

More particularly, in the first embodiment, the at least one elastomeric element is constituted by a first elastomeric ring and a second elastomeric ring, for example O-rings 6 and 7, which are accommodated in appropriate cavities 8 and 9 formed on the end of the male pipe 3.

Said elastomeric elements can be provided for example by means of a butyl mixture with a low compression set.

The second embodiment, shown in Figure 2, has, instead of two O-rings 6 and 7, a single elastomeric element 15, which is conveniently substantially shaped like a parallelepiped and can internally accommodate at least one band-like metallic element 16, which is embedded within the elastomeric material of which the sealing element 15 is made.

In the third embodiment, shown in Figure 3, the connector differs from the one described previously for the first and second embodiments and is designated here by the reference numeral 20.

Such connector comprises a first element 21, which is adapted to be connected to the end of the female pipe 5 and is provided with a first part 22, which abuts against a rolled portion 23 of the end of the male pipe 3 and continues with a second portion 24, which is provided by means of a plurality of flexible elements 25, which are arranged longitudinally along the axis of the pipe and circumferentially around it and are provided with a part 26, which is folded back against the pipe and ensures the flexibility of the elements 25, so that they can be clamped around the pipe or, by releasing them, be spaced from said pipe.

The connector 20 further comprises a second connector portion 30, which is adapted to be coupled to the end of the female pipe 5 and to mate around the connector portion 21 in order to lock the first portion around the male pipe.

A release element 31 is provided at the end of the male pipe 3 and enters the first connector portion 21 with a tubular part 32, which is arranged adjacent to the pipe and is adapted to fit between the elements 26 so as to move them away from the surface of the male pipe 3, so as to release the elements 25 from the rolled portion 23 and thus allow to extract the male pipe from the female pipe.

In this case also, at least one elastomeric sealing element is provided and, as shown in Figure 3, there are two O-rings 35 and 36, as in the first embodiment.

It is of course possible also to provide a single elastomeric element, as shown in Figure 2, or a plurality of elastomeric elements.

The presence of the elastomeric elements allows to provide tightness for the gases used in climate-control, refrigeration and similar systems.

The connector according to the invention allows to combine all the following characteristics:
- quick coupling;
- gas tightness;
- a locking system for preventing extraction;
- a system for indicating that engagement has occurred;
- high mechanical strength and fatigue reliability;
- compact dimensions;
- low cost.

Moreover, in the third embodiment described above there is no need for a specific wrench for reopening, but it is sufficient to provide a simple cylinder that performs reopening by pressing against the flexible elements of the male portion of the connector.

In practice it has been observed that the connector according to the invention fully achieves the intended aim and objects, since it allows to use the connector in climate-control, refrigeration and similar systems.

The connector thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. MI2004A000816 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A quick-coupling connector, particularly for pipes of climate-control, refrigeration and similar systems, comprising a first connector portion adapted to be connected to an end of a male pipe and a second connector portion adapted to be connected to an end of a female portion, said first and second connector portions being adapted to be connected to each other, **characterized in that** it comprises at least one elastomeric element which is interposed between said end of said male pipe and said end of said female portion when said male pipe and said female portion are connected one inside the other.

2. The connector according to claim 1, **characterized in that** said at least one elastomeric element comprises one or more elastomeric rings, which are adapted to be accommodated in seats formed on the surface of the end of the male pipe.

3. The connector according to claim 1, **characterized in that** said at least one elastomeric element comprises one or more elastomeric rings, which are adapted to be accommodated in seats formed on the surface of the end of the female part.

4. The connector according to claim 1, **characterized in that** said at least one elastomeric element comprises an elastomeric element that is substantially parallelepipedal.

5. The connector according to claim 4, **characterized in that** said parallelepipedal elastomeric element contains at least one metallic band-like element, which is embedded within said elastomeric element.

6. The connector according to one or more of the preceding claims, **characterized in that** said first connector portion is adapted to be connected to the end of said female portion and comprises a portion that is designed to be arranged adjacent to said end and abuts against a flange of said end, and continues with another portion that is provided with a plurality of flexible elements that are adapted to be arranged circumferentially around said male pipe and to be spaced therefrom.

7. The connector according to claim 6, **characterized in that** said flexible elements are provided with a portion that is designed to engage a rolled portion of said male pipe.

8. The connector according to claim 6, **characterized in that** said second connector portion comprises a tubular body, which is adapted to mate externally with said first connector portion, said second connector portion constituting a locking element for said first connector portion.

9. The connector according to one or more of the preceding claims, **characterized in that** it comprises a release element, which is designed to be fitted over the end of said male pipe and to mate within said first connector portion when said second connector portion is extracted from said first connector portion.

10. The connector according to one or more of the preceding claims, **characterized in that** said release element comprises a tubular body, which is adapted to be inserted within said first connector portion so as to space said parts in the first connector portion that are in contact with the outer surface of said male pipe end, in order to release said connector.

11. The connector according to claim 1, **characterized in that** said first connector portion is connected to an end of said male tube and said second connector portion is connected to an end of said female portion.

12. The connector according to claim 11, **characterized in that** said second connector portion is engaged with at least one rolled portion formed on the outer surface of said female portion.
